# EUROPEAN PATENT SPECIFICATION

(11) **EP 0 571 469 B1**
(45) Date of publication and mention of the grant of the patent: **21.12.1994**
(21) Application number: 92904815.5
(22) Date of filing: 04.02.1992
(51) Int. Cl.: F16C 5/00, F16C 33/24

(54) **BEARING FOR THE CROSSHEAD OF A TWO-STROKE PISTON ENGINE AND METHOD FOR MANUFACTURING THEREOF**
LAGER FÜR DEN KREUZKOPF EINES ZWEITAKTMOTORS SOWIE VERFAHREN ZU SEINER HERSTELLUNG
PALIER POUR LA CROSSE DE PISTON D'UN MOTEUR A DEUX TEMPS ET SON PROCEDE DE FABRICATION

(30) Priority: 04.02.1991 DK 187/91
(43) Date of publication of application: 01.12.1993
(73) Proprietor: MAN B&W DIESEL A/S, 2450 Copenhagen SV (DK)
(72) Inventor: D'SOUZA, Trevor, John, DK-2625 Vallensbäk (DK)
(74) Representative: Indahl, Peter Jensen
(86) International application number: DK9200034
(87) International publication number: WO9214069

(56) References cited:
- EP-A- 0 218 772
- DE-B- 2 106 918
- DE-C- 844 664
- DE-C- 925 261
- SE-B- 458 055

## Description

### Technical Field.

The invention relates to a crosshead for a large low-speed two-stroke piston engine having a crosshead pin designed to be secured on the piston rod and which is supported in a bearing comprising a lower part connected with the connecting rod and lined with an appropriate bearing material, such as white metal, and an upper part of a, preferably iron-based, backing shell material, the upper part as well as the lower part being provided with a galvanically deposited sliding layer determined to abut on the journal surface of the crosshead pin.

### Prior Art.

From the disclosure of DE patent No. 844 664 it is known to provide a bearing with a sliding layer of PbSnCu, that is galvanically deposited either on the bearing shell or on the bearing material which is made from white metal. In view of the fact that the sliding layer is applied in a thin layer by electroplating the sliding layer proper does not require any finishing treatment.

Large low-speed Diesel engines may either be used for ship propulsion or as a stationary power producing plant. Engines of this type generate very large power, e.g. 4000 kW per cylinder, which implicates that the crosshead has to transfer very large forces during the working of the engine. From a traditional point of view the upper part as well as the lower part in known crossheads are therefore always lined with white metal. The white metal may be cast directly on the crosshead part or be cast on a comparatively thin separate backing shell shaped as a ring segment and which after the finishing treatment may be inserted in the cross-head part.

When using such a separate backing shell in the lower part, the white metal in the upper part may either be cast directly in the upper part or on a separate backing shell. In both cases the applying of the white metal is a complicated and expensive process that may for instance be carried out by heating the upper part of the crosshead to a temperature in the range from 200°C to 400°C so that its radial inside face may be tin-plated. The upper part is subsequently disposed in a casting mould and a lining of white metal is cast on the radial inside face. Due to the heat influence from the casting and the residual stresses in the bearing metal the upper part of the crosshead gets deformed, thereby necessitating a subsequent machining of the abutting surfaces of the upper part and likewise the cast bearing metal must of course be bored so that the crosshead bearing obtains the desired diameter.

### The Invention.

The object of the invention is to simplify the manufacturing of the crosshead upper part while simultaneously preserving a crosshead with good operating properties.

With this aim the crosshead according to the invention is characterized in that the galvanically deposited sliding layer of the upper part is applied directly on the backing shell material.

The invention builds on a surprising recognition that the crosshead upper part may be designed without a lining of bearing metal, thereby providing a crosshead bearing which beneath the sliding layer in the lower part is lined with a proper bearing material, such as white metal, while no proper bearing material is available under the sliding layer in the upper part. During the normal continuous working of the two-stroke piston engine the bearing surface of the upper part of the crosshead is substantially unloaded, but the cross-head pin may load the upper part in other cases, e.g. if there is no compression in the associated engine cylinder due to failing valve closing. It is then important that the journal surfaces of the pin remain undamaged by the contact with the upper part of the crosshead. The sliding layer in the upper part thus does not function as a traditional sliding layer in incessant contact with the crosshead pin but on the contrary as a protective coating only momentarily touched by the crosshead pin.

The sliding layer deposited directly on the backing shell material has quite unexpectedly turned out to offer a sufficient protection of the journal surfaces of the pin when the pin occasionally touches the upper part, probably because the soft sliding layer is positioned directly on the hard backing shell material, thereby immediately transferring the loads through the thin sliding layer to the backing shell material without the risk of fatique failure in or permanent deformation of the sliding layer. Since the pin during the major part of the running time of the engine does not touch the upper part, the sliding layer is not exposed to proper wear. The thickness of the sliding layer is sufficient to offer the necessary conforming between the pin and the bearing surfaces of the upper part.

Due to the fact that the white metal in the upper part may be left out, it is much easier to manufacture the upper part and the previously necessary finishing treatment after the application of the bearing layer may be totally avoided, because the galvanic depositing may be effected sufficiently uniformly to make the finishing treatment unnecessary.

In a preferred embodiment the galvanically deposited sliding layer has a thickness in the range from 0.075 to 0.1 mm. In order to cover the hard backing shell material a minimum thickness of no less than 0.03 mm of the sliding layer is required, but with a view to the operational reliability of the engine it is desirable that the sliding layer is thicker. When the galvanically deposited layer has a thickness of appr. 0.075 mm a continued material deposit may be effected unevenly and when the deposited layer exceeds a thickness of 0.1 mm the variations in the layer thickness may necessitate an undesired finishing treatment. Thus, the preferred thickness range indicates the thickest uniform layers that may be deposited without any need for a finishing treatment.

The invention further relates to a method of use in the manufacturing of a crosshead whose upper part is produced from a blank of a preferably iron-based backing shell material, said method being characterized in that the surfaces of the blank, except the radial inside face, is machined according to requirements to obtain the intended final dimensions, that the radial inside face is bored to a radius which in comparison with the desired working radius has a predetermined overmeasure, and that a coating intended as sliding layer is applied to the radial inside face of the blank in a galvanic bath in a thickness substantially corresponding to said predetermined overmeasure. By these features a substantial simplification of the manufacturing of the upper part is obtained, since the mechanical processing of the blank may be completed without interruption, following which the prefabricated upper part may be transferred to a galvanic bath in order to be coated with the sliding layer. In view of the fact that only an insignificant amount of heat is deposited in the upper part during the galvanic process, no distortion or deformations of the blank occur and, consequently, mechanical finishing treatment is unnecessary.

### Brief Description of the Drawings.

The invention will now be described in more detail with reference to the schematical drawings, in which
Figs. 1 and 2 show a first embodiment of a crosshead in side elevation and cross-section, respectively, and
Figs. 3 and 4 are corresponding illustrations of a second embodiment according to the invention.

### Preferred Embodiments.

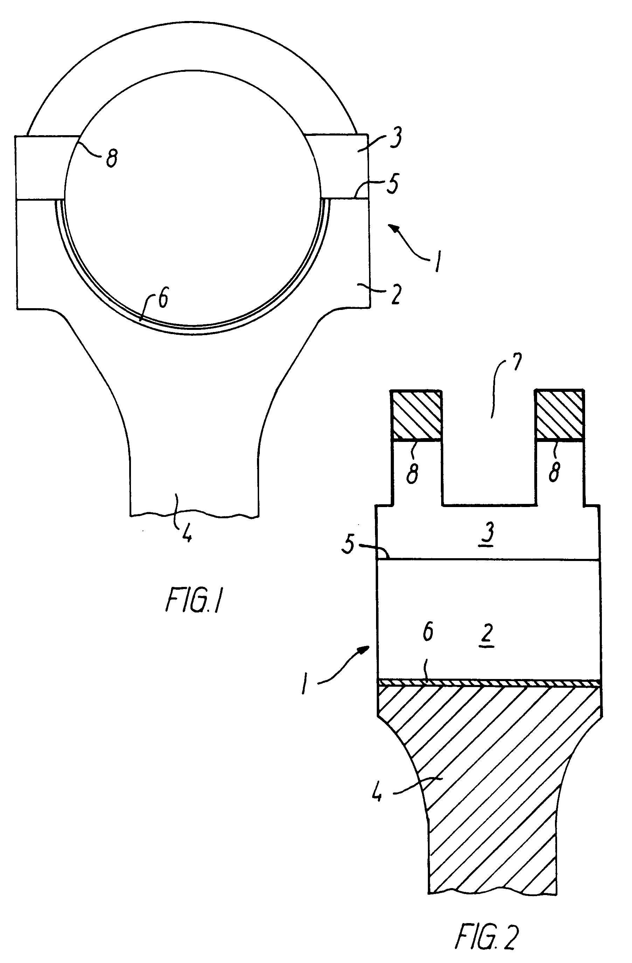

The crosshead bearing 1 illustrated in Figs 1 and 2 comprises a lower part 2 and an upper part 3 of a backing shell material, e.g. steel, cast iron, nodular cast iron or a similar material. The lower part 2 of the bearing which in the illustrated embodiment is integral with the connecting rod 4, but which might as well be a separate component bolted on the connecting rod adjoins the upper part 3 in a plane separating surface 5 and is clamped to the upper part by means of bolts, not shown. The lower part is lined with cast bearing metal 6 throughout its radial inside face.

The upper part 3 of the bearing has at its upper part a recess 7 giving passage for the piston rod, not shown, that is secured to the crosshead pin, likewise not shown, and which is received in the bearing. The upper part carries on its radial inside face a galvanically deposited (electroplated) running-in or sliding layer 8 which constitutes a bearing surface for the journal surface of the pin.

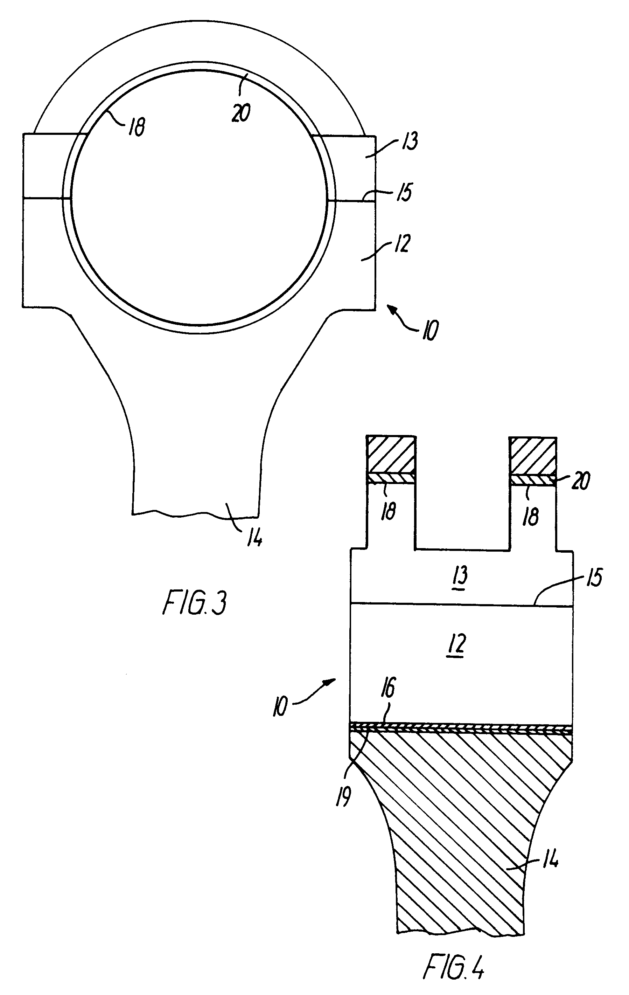

In the embodiment of the bearing illustrated in Figs 3 to 4 there is simply added the cipher 10 to the reference numeral for members of the same type as described above.

This embodiment differs in that the bearing surfaces are provided on separate backing shells in the form of inserts 19, 20 shaped as ring segments and made from steel, wherein bearing metal 16 is cast on the inside face of insert 19 in the lower part and wherein the inside face of insert 20 carries the galvanically applied sliding layer 18. The use of the steel insert 19 makes it possible in a known manner to prestress by pressure the bearing material in the lower part, thereby enabling the bearing to endure a larger specific load. When the bearing parts are clamped together, the prestressing is effected in that the two downwards directed edges of insert 20 at the separating surface 15 are pressing downwards on the edges of insert 19.

It is possible to provide a corresponding pre-stressing of insert 20 by making use of an upper part in one piece of the type illustrated in Figs 1 to 2.

It is well known from the manufacture of slide bearings to make a galvanically applied deposit of a sliding layer as the final layer on a proper lining of bearing metal. Coatings of PbSn or PbSnCu may be mentioned as examples of usable sliding layers. The deposit proper is carried out in a galvanic bath in which the prefabricated upper part is submerged. An easily removable electrically insulating coating is applied to the surfaces of the upper part that shall not be coated. The thickness of the galvanically deposited sliding layer is inter alia determined by the time of submersion in the bath and the concentration of the bath and by the voltage applied to the upper part.

## Claims

1. A crosshead for a large low-speed two-stroke piston engine having a crosshead pin designed to be secured on the piston rod and which is supported in a bearing comprising a lower part (2; 12) connected with the connecting rod and lined with an appropriate bearing material (6; 16), such as white metal, and an upper part (3; 13) of a, preferably iron-based, backing shell material, the upper part as well as the lower part being provided with a galvanically deposited sliding layer determined to abut on the journal surface of the crosshead pin, characterized in that the galvanically deposited sliding layer (8; 18) of the upper part is applied directly onto the backing shell material.

2. A crosshead according to claim 1, characterized in that the thickness of the galvanically deposited sliding layer (8; 18) is in the range from 0.075 mm to 0.1 mm.

3. A crosshead according to claim 1 or 2, in which the upper part (13) comprises an insert (20) of steel, characterized in that the coating (18) is deposited on the radial inside face of the insert.

4. A method for manufacturing of a crosshead of the type described in any of claims 1 to 3, and in which the upper part (3; 13) is made from a cast or welded blank of a preferably iron-based backing shell material, characterized in that the surfaces of the blank, except the radial inside face, is machined according to requirements to obtain the intended final dimensions, that the radial inside face is bored to a radius which in comparison with the desired working radius has a predetermined overmeasure, and that a coating (8; 18) intended as sliding layer is applied to the radial inside face of the blank in a galvanic bath in a thickness substantially corresponding to said predetermined overmeasure.

## Patentansprüche

1. Kreuzkopf für eine grosse Zweitakt-Kolbenmaschine geringer Geschwindigkeit mit einem Kreuzkopfzapfen, der zur Anbringung an die Kolbenstange angepasst ist und der in einem Lager gestützt ist, das einen unteren Teil (2; 12), der mit der Kurbel- bzw. Schubstange verbunden ist und mit einem geeigneten Lagerwerkstoff (6; 16), wie Weissmetall, belegt ist und einen oberen Teil (3; 13) aus einem bevorzugt auf Eisen basierenden Lagerschalen-Werkstoff aufweist, wobei der obere Teil und der untere Teil mit einer galvanisch abgeschiedenen Gleitschicht/ Lage ausgestattet sind, die so bemessen ist, dass sie an der Lageroberfläche des Kreuzkopfzapfens anstösst/anliegt, dadurch **gekennzeichnet**, dass die galvanisch abgelagerte Gleitlage (8; 18) des oberen Teils direkt auf den Lagerschalen-Werkstoff aufgebracht ist.

2. Kreuzkopf nach Anspruch 1, dadurch **gekennzeichnet**, dass die Dicke der galvanisch abgeschiedenen Gleitschicht (8; 18) im Bereich von 0,075 bis 0,1 mm liegt.

3. Kreuzkopf nach Anspruch 1 oder 2, in dem der obere Teil (13) einen Einsatz (20) aus Stahl enthält, dadurch **gekennzeichnet**, dass die Beschichtung (18) auf der radial inneren Oberfläche des Einsatzes vorgesehen ist.

4. Verfahren zum Herstellen eines Kreuzkopfes nach einem der vorhergehenden Ansprüche, bei dem das Oberteil (3; 13) aus einem gegossenen oder geschweissten Rohteil aus einem bevorzugt auf Eisen basierenden Lagerschalen-Werkstoff gearbeitet wird, dadurch **gekennzeichnet**, dass die Oberflächen des Rohteils, mit Ausnahme der radial inneren Oberfläche, nach Erfordernis bearbeitet werden, um die gewünschten endgültigen Abmessungen zu erhalten, dass die radial innen liegende Oberfläche in einem Radius/Durchmesser gebohrt wird, der im Vergleich zu dem gewünschten Arbeits-Radius ein vorbestimmtes Übermass hat, und dass eine als Gleitschicht beabsichtigte Schicht (8;18) auf die radial innere Oberfläche des Rohteils in einem Galvanik-Bad mit einer Dicke aufgebracht wird, die im wesentlichen mit dem vorbestimmten Übermass korrespondiert.

## Revendications

1. Crosse de piston de moteur deux-temps de grande taille, faible vitesse, comportant un tourillon de crosse conçu pour être monté sur la tige de piston et supporté par un palier comportant une partie inférieure (2; 12) reliée à la tige de liaison et garnie d'un matériau porteur approprié (6; 16), par exemple du métal blanc, et une partie supérieure (3; 13) en matériau formant coquille de palier, matériau de préférence à base de fer, la partie supérieure aussi bien que la partie inférieure étant pourvues d'une couche de glissement déposée par voie galvanique et prévue pour prendre appui sur la surface de logement du tourillon de crosse, **caractérisée** en ce que la couche de glissement (8; 18) déposée par voie galvanique sur la partie supérieure est appliquée directement sur le matériau de la coquille de palier.

2. Crosse de piston selon la revendication 1, **caractérisée** en ce que l'épaisseur de la couche de glissement (8; 18) déposée par voie galvanique se situe dans la gamme de 0,075 mm à 0,1 mm.

3. Crosse de piston selon les revendications 1 ou 2, dans laquelle la partie supérieure (13) comprend une garniture en acier (20), **caractérisée** en ce que le revêtement (18) est déposé sur la face radialement interne de la garniture.

4. Procédé de fabrication d'une crosse de piston du type défini dans l'une quelconque des revendications 1 à 3 et dans laquelle la partie supérieure (3; 13) est constituée à partir d'une ébauche moulée ou soudée d'un matériau de coquille de palier, de préférence à base de fer, **caractérisé** par le fait que les surfaces de l'ébauche, sauf la face radialement interne, sont usinées selon les exigences pour obtenir les dimensions finales prévues, en ce que la face radialement interne est alésée à un rayon qui par rapport au rayon souhaité de travail présente un surdimensionnement prédéterminé, et en ce que le revêtement (8; 18) prévu comme couche de glissement est appliqué sur la face radialement interne de l'ébauche dans un bain galvanique, en une épaisseur correspondant essentiellement audit surdimensionnement prédéterminé.
